# EUROPÄISCHE PATENTSCHRIFT

(11) **EP 1 452 722 B1**
(45) Veröffentlichungstag und Bekanntmachung des Hinweises auf die Patenterteilung: **11.05.2011**
(21) Anmeldenummer: 04075695.9
(22) Anmeldetag: 25.02.2004
(51) Int. Cl.: F02M 35/10

(54) **Ansaugkrümmer, insbesondere für Verbrennungsmotoren**
Intake manifold particularly for combustion engine
collecteur d'admission en particulier pour moteur à combustion

(30) Priorität: 26.02.2003 IT BZ20030015
(43) Veröffentlichungstag der Anmeldung: 01.09.2004
(73) Patentinhaber: Seeber S.r.l., 39055 Laives (BZ) (IT)
(72) Erfinder: Rocco, Andrea, 10131 Torino (IT)
(74) Vertreter: Ausserer, Anton

(56) Entgegenhaltungen:
- WO-A-02/101226
- US-A- 3 945 357
- US-A- 4 577 596
- US-A- 4 649 876
- PATENT ABSTRACTS OF JAPAN Bd. 0093, Nr. 26 (M-441), 21. Dezember 1985 (1985-12-21) & JP 60 159036 A (SUZUKI JIDOSHA KOGYO KK), 20. August 1985 (1985-08-20)

## Beschreibung

Die vorliegende Erfindung bezieht sich auf einen Ansaugkrümmer, insbesondere für Verbrennungsmotoren gemäß dem Oberbegriff des Anspruchs 1.

Die bekannten Ansaugkrümmer dieser Art bestehen aus einer Anzahl von Kanälen, die der Anzahl der mit Luft zu speisenden Zylinder des Motors entspricht. Zur Verbindung mit den Zylindern war jeder Kanal mit dem anderen aneinander zu reihen und entsprechend waren die Kanäle des Ansaugkrümmers an einem sogenannten "Plenum" oder Luftkammer gemäß einer aneinander liegenden Anordnung der einzelnen Kanäle angeschlossen. Diese Anordnung beeinträchtigte jedoch die gleichförmige Entnahme der Luft aus dem Plenum durch einen nicht einwandfrei verteilten Luftstrom, z.B. zwischen einem Außen- und einem Innenkanal der aneinander liegenden Anordnung und daher bei nicht gleichförmigen Luftmengen und - Geschwindigkeiten. Die Verteilung der Kanäle des Ansaugkrümmers gemäß einem im wesentlichen zweidimensionalen Verlauf beanspruchte überdies einen beträchtlichen Platzbedarf und daher viel Raum und hatte eine nicht optimale Bemessung des Plenums zur Folge.

Auch wenn diese Probleme bis jetzt erkannt wurden, wurden sie nicht auf angemessene Weise beseitigt, wahrscheinlich auch da nicht die Art und Weise gefunden wurde, wie die Kanäle am Ausgang des Plenums in Kombination mit der Ausbildung des zu entwerfenden Ansaugkrümmers anzuordnen sind.

Die Aufgabe der vorliegenden Erfindung ist daher die Beseitigung der Nachteile der Ansaugkrümmer der herkömmlichen Art und einen Ansaugkrümmer vorzuschlagen, der die Luftgeschwindigkeit und -Menge in den Kanälen des Ansaugkrümmers möglichst derart gleichförmig gestalten lässt, dass die Luftverteilung in den verschiedenen Kanälen im Wesentlichen für jeden Motorzylinder identisch ist. Eine weitere Aufgabe liegt darin, den Platzbedarf des Ansaugkrümmers derart zu verringern, dass auch der Platzbedarf des Plenums an einem Höchstmass vermindert werden kann.

Diese Aufgaben werden durch einen Ansaugkrümmer mit den kennzeichnenden Merkmalen des Anspruchs 1 gelöst.

Werden die Achsen mindestens von zwei aneinander liegenden Kanälen beim Austritt aus dem Plenum kniebogenartig mit den Krümmungen in zwei zueinander geneigten Ebenen angeordnet, können die beiden Kanäle mit den Achsen in einer Ebene übereinanderliegend angeordnet werden, die zur Ebene senkrecht ist, in der sich die Achsen der aneinanderliegenden Kanäle vor den Eintritt in die Zylinder befinden.

Im Dokument 1 (US 4 577 596 A) wird ein Ansaugkrümmer für eine V- Typ Brennkraftmaschine mit zwei Zylinderreihen und einer Mehrzahl von Zylindereinlassöffnungen beschrieben, umfassend eine Lufteinlassöffnung, zwei an der Einlassöffnung angeschlossene Zufuhrrohre, wobei diese im wesentlichen "U" - förmig und im wesentlichen oberhalb und parallel zu einer Zylinderreihe angeordnet sind, eine Mehrzahl von abgezweigten Rohren, die in Längsrichtung längs eines jeden Zufuhrrohrs gebildet sind und sich durch die Maschine mit einer Öffnung und im wesentlichen zu den Zufuhrrohren senkrecht erstrecken, wobei die abgezeigten Rohre derart angeordnet sind, dass mindestens zwei der abgezweigten sich von demselben Zufuhrrohr erstreckenden Rohre vertikal mit dem Oberteil der anderen mit dem Zufuhrrohrs längs einer zum Zufuhrrohr senkrechten Ebene und für einen Abschnitt ihrer Länge ausgerichtet sind, die sich vom Zufuhrrohr erstreckt, und Mittel zur Verbindung eines jeden Öffnungsendes des abgezweigten Rohrs mit einem Zylindereinlassöffnung auf einer abgewandten Seite der Maschine an der abgewandten Seite der Maschine vom Zufuhrrohr, mit dem das abgezweigte Rohr verbunden ist.

In Dokument 1 wird der Übergang von der aneinanderliegenden Stellung in jene übereinanderliegende in einer Version mit miteinander zu verschweißenden Halbschalen des Ansaugkrümmers erhalten, wobei eine der Halbschalen einer der Kanäle kniebogenartig gekrümmt ist, mit einer Krümmung in einer Ebene, die zur Ebene geneigt ist, in der sich die Krümmung eines Kniebogens der Halbschale des anderen Kanals befindet, um in einer gemeinsamen Halbschale zu enden. Die Halbschale des ersten Kanals und jene des zweiten Kanals werden durch die gemeinsame Halbschale unter Zwischenschaltung eines Einsatzes geschlossen, der eine Trennwand aufweist, der in der gemeinsamen Halbschale gleichzeitig die Decke eines der Kanäle und die Fortsetzung der Halbschale des anderen Kanals bildet. Der Einsatz ist überdies derart gestaltet, dass seine Wände die Wände der Halbschalen des ersten und des zweiten Kanals vereinen, sodass zwei Kanäle konstanten und gleichen Querschnittes in den beiden Kanälen selbst erhalten werden.

Weitere Einzelheiten und Merkmale gehen aus der folgenden Beschreibung eines in der beigefügten Zeichnung därgestellten Ausführungsbeispieles hervor. Es zeigen:
- Figur 1: schematisch einen Ansaugkrümmer herkömmlicher Art, im Querschnitt;
- Figur 2: schematisch einen Ansaugkrümmer gemäß der Erfindung, im Querschnitt;

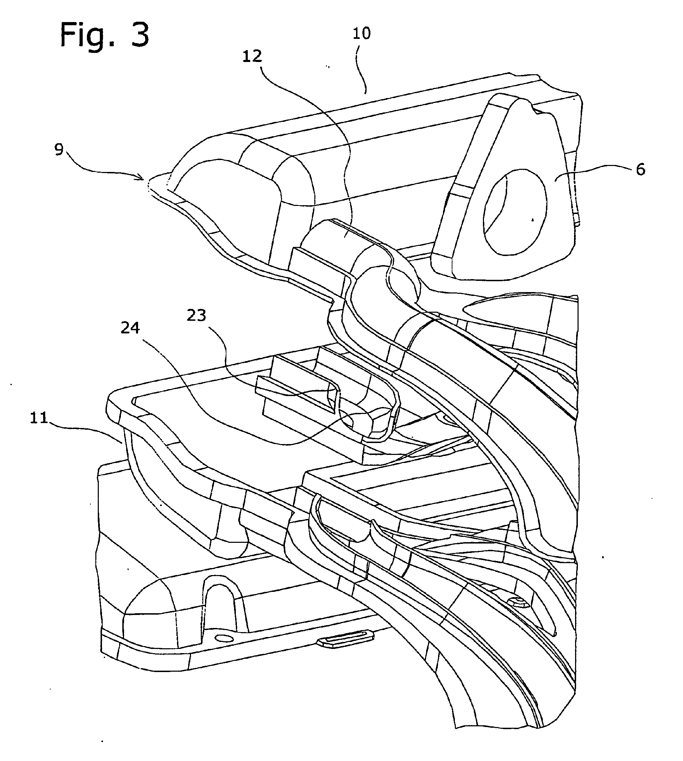

- Figur 3: ein Explosionsteilschaubild eines erfindungsgemäßen Ansaugkrümmers mit Plenum;

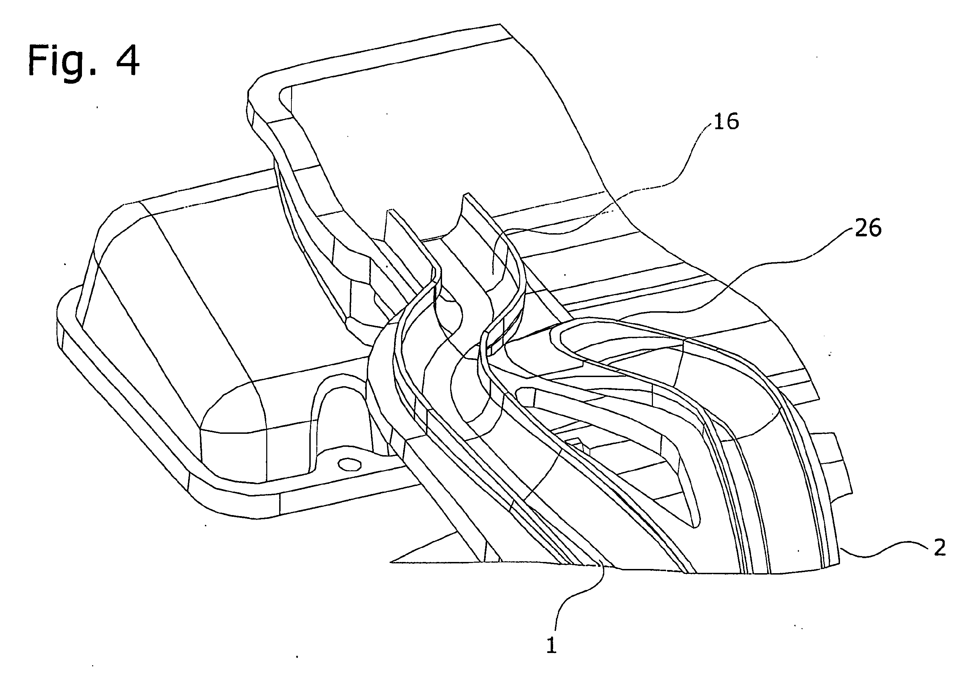

- Figur 4: ein Teilschaubild der unteren, erfindungsgemäßen Halbschalen eines Ansaugkrümmers mit Plenum; und

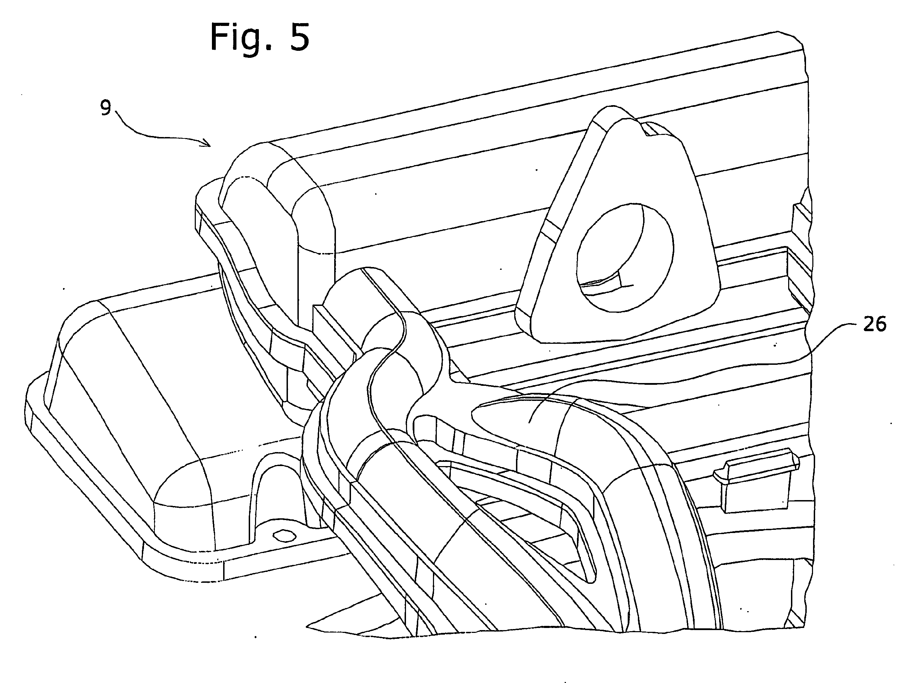

- Figur 5: ein Teilschaubild eines erfindungsgemäßen Ansaugkrümmers mit Plenum.

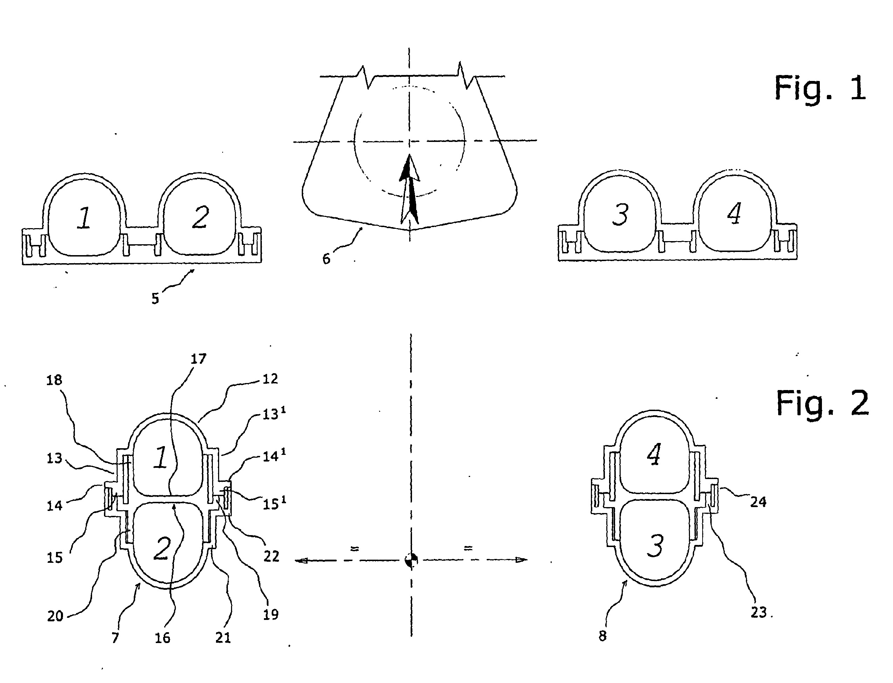

In Figur 1 sind mit den Bezugsziffern 1, 2, 3 und 4 vier Kanäle eines Ansaugkrümmers herkömmlicher Art gezeigt, bei dem die vier Kanäle sowohl in Verbindung mit den Zylindern eines Verbrennungsmotors als auch am Ausgang eines Plenums aneinander liegen, von dem in Figur 1 mit 6 der Befestigungsflansch des Drosselklappenventils schematisch angegeben ist.

In Figur 2 sind hingegen gemäß der Erfindung übereinanderliegende Kanäle 7 und 8 dargestellt, die aus einem Plenum 9 bzw. einer Plenumkammer treten, dessen Deckel 10 mit dem genannten Befestigungsflansch 6 versehen ist und mit einer Wanne 11 zusammenzubauen ist.

Der Ansaugkrümmer 5 ist aus Halbschalen 12 gebildet, die im Übergangsbereich zwischen einer aneinander liegenden Anordnung und einer übereinander liegenden Anordnung der Kanäle 1, 2 und jeweils 3 zwei Stufen 13 aufweisen, die nach unten gerichtet sind und deren Trittfläche nach außen und Stufenhöhe in einer zweiten Stufe 14 und einer Fortsetzung 15 endet.

Ein Trenneinsatz 16 ist mit einem Boden 17 versehen, von dem sich von dessen Seiten jeweils eine an der Trittfläche der Stufe 13 zum Anstoßen kommende Rippe 18, ein an der Fortsetzung 15 zum Anstoßen kommender Steg 19 und eine Rippe 20 erstrecken, die zu einer Aussparung gerichtet ist, die aus einer ersten Stufe 21 einer unteren Halbschale des Kanals 2 (oder 3) gebildet ist. Die Stufenhöhe einer zweiten Stufe 22 der Halbschale selbst stößt schließlich an der unteren Seite der Trittfläche der Stufe 14 an.

Im Übergangsbereich zwischen der aneinanderliegenden Anordnung und jener übereinanderliegenden der Kanäle, geht die Halbschale des Kanals 1 unmittelbar in Kniebögen 23 und 24 der Rippen 18 des Einsatzes 16 über, dessen Boden den Deckel 26 der unteren Halbschale des Kanals 2 (3) bildet.

Die kniebogenartige Ausbildung der Ränder des Einsatzes 16 erlaubt eine bequeme Vibrationsschweißung sowohl mit der unteren Halbschale eines der Kanäle als auch mit der oberen Halbschale des anderen Kanals.

## Patentansprüche

1. Ansaugkrümmer, insbesondere für Verbrennungsmotoren, umfassend eine Anzahl von, eine Luftkammer mit einer entsprechenden Anzahl von Motorzylindern verbindenden Kanälen, wobei jeder Kanal durch zwei Halbschalen gebildet wird, **dadurch gekennzeichnet, dass** der Übergang von der aneinanderliegenden Stellung zu jener übereinanderliegenden, derart ausgeführt wird, dass eine der Halbschale des einen (2; 3) der Kanäle (1, 2; 3, 4) kniebogenartig mit Krümmung in einer Ebene gekrümmt ist, die gegenüber einer Ebene geneigt ist, in der sich die Krümmung eines Kniebogens der Halbschale des anderen Kanals (1; 4) befindet, um in eine gemeinsame Halbschale zu enden, wobei die Halbschale des ersten Kanals und jene des zweiten Kanals und die gemeinsame Halbschale ergänzende Halbschalen unter Zwischenschaltung eines Einsatzes (16) sind, der eine Trennwand (17) aufweist, die in der gemeinsamen Halbschale gleichzeitig die Decke eines (2; 3) der Kanäle und die Fortsetzung der Halbschale des anderen Kanals (1; 4) bildet.

2. Ansaugkrümmer nach Anspruch 1, **dadurch gekennzeichnet, dass** der Einsatz (16) derart gestaltet ist, dass seine Wände (18) mit den Wänden der Halbschalen des ersten und des zweiten Kanals derart zusammenpassen, dass zwei Kanäle konstanten und gleichen Querschnittes in den Kanälen selbst erhalten werden.

3. Ansaugkrümmer nach Anspruch 2, **dadurch gekennzeichnet, dass** er durch eine obere Halbschale eines Kanals (1, 2) und eine untere Halbschale eines anderen, über diesen letzten liegenden Kanal (3, 4) gebildet ist, die an ihren freien Rändern jeweils miteinander kuppelbaren Stufen unter Zwischenschaltung eines Trenneinsatzes (16) aufweisen, der mit einem Boden (17) versehen ist, von dem sich seitlich Rippen (18) und Stege (19) erstrecken, die in den von Stufen gebildeten Aussparungen aufgenommen werden.

4. Ansaugkrümmer nach Anspruch 3, **dadurch gekennzeichnet, dass** im Übergangsbereich zwischen der aneinanderliegenden Anordnung und jener Übereinanderliegenden der Kanäle die Halbschale eines der Kanäle (1; 4) unmittelbar in Kniebögen (23 und 24) der Rippen (18) des Einsatzes (16) übergeht, dessen Boden den Deckel (26) der unteren Halbschale des anderen Kanals (2; 3) bildet.

5. Ansaugkrümmer nach einem der vorstehenden Ansprüche, **dadurch gekennzeichnet, dass** die Halbschalen der Kanäle und jeweils die Halbschalen und die Trenneinsätze miteinander verschweißt, insbesondere über Vibrationsschweißen verschweißt sind.

## Claims

1. Intake manifold, particularly for internal combustion engines, comprising a number of ducts connecting a plenum chamber with a corresponding number of motor cylinders, each duct being formed by two half-shells, **characterised by** the fact that the transition from the side by side position to the superimposed position is realised in such a way that one of the half-shells of one (2; 3) of the ducts (1; 2; 3; 4) is bent as an elbow with a curvature in a plane inclined with respect to a plane in which lies the curvature of an elbow of the half-shell of the other duct (1; 4), to end up in a common half-shell, the half-shell of the first duct, the half-shell of the second duct and the common half-shell being complementary half-shells with interposition of an insert (16) having a dividing wall (17) forming, in the common half-shell, both the roof of one (2, 3) of the ducts and the prosecution of the half-shell of the other duct (1; 4).

2. Intake manifold according to claim 1, **characterised by** the fact that the insert (16) is structured in such a way that its walls (18) match the walls of the half-shells of the first and second ducts so as to provide two ducts of constant and equal cross-section.

3. Manifold according to claim 2, **characterised by** the fact of being formed from an upper half-shell of a duct (1, 2) and a lower half-shell of another conduct (3, 4) superimposed to the former, said half-shells respectively having, at their free edges, step-like formations matching with each other by interposing the separating insert (16) having a bottom from which raised portions (18) and ribs (19), predisposed to be housed within the recesses defined by the step-like formations, laterally extend.

4. Manifold according to claim3, **characterised by** the fact that, in the link portion between the side by side arrangement and the superimposed arrangement of the ducts, the half-shell of one of the ducts (1, 4) passes directly in elbows (23, 24) of the raised portions (18) of the insert (16), the bottom of which forms the top (26) of the lower half-shell of the other duct (2; 3).

5. Manifold according to one of the preceding claims, **characterised in that** the half-shells of the ducts and respectively the half-shells and the separating inserts are welded together, particularly by vibration welding.

## Revendications

1. Collecteur d'admission, particulièrement pour moteurs à combustion interne, comprenant un nombre de conduits reliant un plénum à un nombre correspondant de cylindres moteur, chaque conduit étant formé par deux demi-coquilles, **caractérisé en ce que** la transition de la position côte à côte à la position superposée est réalisée de façon qu'une des demi-coquille d'un (2; 3) des conduits (1; 2; 3; 4) soit plié en coude avec courbure dans un plan incliné par rapport à un autre plan où gît la courbure d'un coude de la demi-coquille de l'autre conduit (1; 4), pour terminer en une demi-coquille commune, la demi-coquille du premier conduit, celle du deuxième conduit et la demi-coquille commune étant des demi-coquilles complémentaires avec interposition d'une pièce insérée (16) présentant une paroi de séparation (17) formant, dans la demi-coquille commune, à la fois le ciel de l'un (2; 3) des conduits et la continuation de la demi-coquille de l'autre conduit (1; 4).

2. Collecteur d'admission selon la revendication 1, **caractérisé en ce que** la pièce insérée (16) est structurée de façon que ses parois (18) épousent les parois des demi-coquilles du premier et du deuxième conduits de façon à obtenir deux conduits avec sections transversales constantes et égales entre elles.

3. Collecteur selon la revendication 2, **caractérisé en ce qu'**il est formé par une demi-coquille supérieure d'un conduit (1, 2) et une demi-coquille inférieure d'un autre conduit (3, 4) superposé à ce dernier qui présentent respectivement à leur bord libre des marches accouplables entre elles avec interposition de la pièce insérée séparatrice (16) pourvue d'un fond duquel s'étendent latéralement des plaques (18) et des nervures (19) aptes à être accueillies dans les renfoncements formés par les marches.

4. Collecteur selon la revendication 3, **caractérisé en ce que**, dans la zone de raccord entre l'arrangement côte à côte et l'arrangement superposé des conduits, la demi-coquille d'un des conduits (1; 4) passe directement en un coude (23 et 24) des plaques (18) de la pièce insérée (16) le fond de laquelle forme un couvercle (26) de la demi-coquille inférieure de l'autre conduit (2; 3).

5. Collecteur selon l'une des revendications précédentes, **caractérisé en ce que** les demi-coquilles des conduits et respectivement les demi-coquilles et les pièces insérées séparatrices sont soudées entre elles, en particulier par vibration.
